# EUROPEAN PATENT SPECIFICATION

(11) **EP 2 740 225 B1**
(45) Date of publication and mention of the grant of the patent: **29.03.2017**
(21) Application number: 12780899.6
(22) Date of filing: 02.08.2012
(51) Int. Cl.: H04B 7/08

(54) **ELECTRONIC DEVICE WITH ANTENNA SWITCHING CAPABILITIES**
ELEKTRONISCHE VORRICHTUNG MIT ANTENNENUMSCHALTUNGSFUNKTIONEN
DISPOSITIF ÉLECTRONIQUE À CAPACITÉS DE COMMUTATION D'ANTENNE

(30) Priority: 05.08.2011 US 201113204617
(43) Date of publication of application: 11.06.2014
(73) Proprietor: Apple Inc., Cupertino, CA 95014 (US)
(72) Inventor: MUJTABA, Syed, Aon, Cupertino, CA 95014 (US); SONG, Kee-Bong, Cupertino, CA 95014 (US)
(74) Representative: Keseris, Denis
(86) International application number: PCT/US2012/049342
(87) International publication number: WO 2013/022702

(56) References cited:
- WO-A1-2010/088612
- WO-A1-2011/007211
- US-A1- 2004 266 374
- US-A1- 2005 272 384
- US-A1- 2010 183 099

## Description

### Priority Applications

This application claims priority to co-pending U.S. Patent Application No. 13/204,617 filed August 5, 2011 and entitled "ELECTRONIC DEVICE WITH ANTENNA SWITCHING CAPABILITIES".

### Background of the Invention

This relates generally to wireless communications circuitry, and more particularly, to electronic devices that have wireless communication circuitry with multiple antennas.

Electronic devices such as cellular telephones and portable computers are often provided with wireless communications capabilities. For example, electronic devices may use long-range wireless communication circuitry such as cellular telephone circuitry and WiMax (IEEE 802.16) circuitry. Electronic devices may also use short-range wireless communications circuitry such as WiFi^{®} (IEEE 802.11) circuitry and Bluetooth^{®} circuitry.

Antenna performance affects the ability of a user to take advantage of the wireless capabilities of an electronic device. If antenna performance is not satisfactory, calls may be dropped or data transfer rates may become undesirably slow. To ensure that antenna performance meets design criteria, it may sometimes be desirable to provide an electronic device with multiple antennas. In some situations, control circuitry within a device may be able to switch between the antennas and to monitor the quality of received signals associated with each respective antenna to determine an optimum antenna for use in handling call traffic.

Some of the electronic devices having multiple antennas can be used in a time division multiple access (TDMA) communications system such as the "2G" Global System for Mobile Communications (GSM) cellular system. Electronic devices of this type often do not support receive diversity (i.e., TDMA-based electronic devices are often not capable of simultaneously receiving downlink signals using the multiple antennas) and can therefore only monitor signal quality of one antenna at a time.

Moreover, TDMA-based electronic devices may sometimes receive downlink signals that lack energy during silence periods. For example, consider a scenario in which a call has been established between a first user device and a second user device. If the second user is silent or exhibits low voice activity levels, the second user device may output signals that are discontinuously transmitted (DTX). As a result, the first user device will sometimes receive weak downlink signals that are unsuitable for signal quality measurements.

US2004266374 A1 shows an antenna selecting method for wireless communication system, involving determining data packet preamble signal strength associated with antenna, and selecting antenna, if determined signal strength exceeds preset threshold.

Other examples of prior art methods and devices can be found disclosed in, for example, WO 2010/088,612 A, WO 2011/007,211 A, US 2010/183,099 A and US 2005/272,384 A.

It would therefore be desirable to be able to provide improved ways for monitoring downlink signal quality in TDMA-based devices with multiple antennas and mechanisms for selecting the optimum antenna for handling wireless communications link.

### Summary of the Invention

The invention is defined by independent claim 1 relating to a method of operating a wireless receiver, independent claim 6 relating to a non-transitory computer readable storage medium and independent claim 7 relating to a wireless device.

Further features of the present invention, its nature and various advantages will be more apparent from the accompanying drawings and the following detailed description.

### Brief Description of the Drawings

FIG. 1 is a perspective view of an illustrative electronic device with wireless communication circuitry having multiple antennas in accordance with an embodiment of the present invention.
FIG. 2 is a schematic diagram of a wireless network including a base station and an illustrative electronic device with wireless communication circuitry having multiple antennas in accordance with an embodiment of the present invention.
FIG. 3 is a diagram of illustrative wireless circuitry including multiple antennas and circuitry for controlling use of the antennas in accordance with an embodiment of the present invention.
FIG. 4 is a diagram of an illustrative antenna switching control algorithm in accordance with an embodiment of the present invention.
FIG. 5 is a flow chart of illustrative steps involved in computing a signal strength difference value for signals received using a currently active antenna and an alternate antenna in accordance with an embodiment of the present invention.
FIG. 6 is a diagram showing different types of traffic channel multi-frames in accordance with an embodiment of the present invention.
FIG. 7A is a diagram showing beacon-channel-based measurement of signal strength for half-rate time division multiple access frames in accordance with an embodiment of the present invention.
FIG. 7B is a diagram showing beacon-channel-based measurement of signal strength for full-rate frame time division multiple access frames in accordance with an embodiment of the present invention.
FIG. 8 is a flow chart of illustrative steps involved in computing a signal strength difference value based on measurements of the type shown in connection with FIGS. 7A and 7B in accordance with an embodiment of the present invention.
FIG. 9 is a diagram showing measurement of signal strength by blindly detecting non-silent frames and intermittently-transmitted silence indicator description (SID) frames in accordance with an embodiment of the present invention.
FIG. 10 is a diagram showing measurement of signal strength by monitoring a predetermined pattern of reserved silence indicator description (SID) frames in accordance with an embodiment of the present invention.
FIG. 11 is a flow chart of illustrative steps involved in computing a signal strength difference value for frames encoded in an adaptive multi-rate (AMR) audio format in accordance with an embodiment of the present invention.
FIG. 12 is a flow chart of illustrative steps involved in computing a signal strength difference value for frames encoded in a non-adaptive multi-rate (non-AMR) audio format in accordance with an embodiment of the present invention.

### Detailed Description of the Invention

Electronic devices may be provided with wireless communications circuitry. The wireless communications circuitry may be used to support wireless communications in multiple wireless communications bands. The wireless communications circuitry may include multiple antennas arranged to implement an antenna diversity system.

The antennas can include loop antennas, inverted-F antennas, strip antennas, planar inverted-F antennas, slot antennas, hybrid antennas that include antenna structures of more than one type, or other suitable antennas. Conductive structures for the antennas may be formed from conductive electronic device structures such as conductive housing structures (e.g., a ground plane and part of a peripheral conductive housing member or other housing structures), traces on substrates such as traces on plastic, glass, or ceramic substrates, traces on flexible printed circuit boards ("flex circuits"), traces on rigid printed circuit boards (e.g., fiberglass-filled epoxy boards), sections of patterned metal foil, wires, strips of conductor, other conductive structures, or conductive structures that are formed from a combination of these structures.

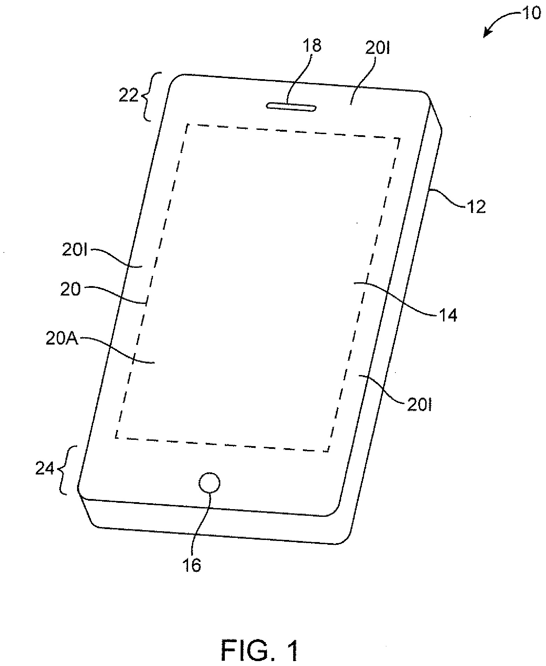

An illustrative electronic device of the type that may be provided with one or more antennas (e.g., two antennas, three antennas, four antennas, five or more antennas, etc.) is shown in FIG. 1. Electronic device 10 may be a portable electronic device or other suitable electronic device. For example, electronic device 10 may be a laptop computer, a tablet computer, a somewhat smaller device such as a cellular telephone, a media player, a wrist-watch device, pendant device, headphone device, earpiece device, or other wearable or miniature device, etc.

Device 10 may include a housing such as housing 12. Housing 12, which may sometimes be referred to as a case, may be formed of plastic, glass, ceramics, fiber composites, metal (e.g., stainless steel, aluminum, etc.), other suitable materials, or a combination of these materials. In some situations, parts of housing 12 may be formed from dielectric or other low-conductivity material. In other situations, housing 12 or at least some of the structures that make up housing 12 may be formed from metal elements.

Device 10 may, if desired, have a display such as display 14. Display 14 may, for example, be a touch screen that incorporates capacitive touch electrodes. Display 14 may include image pixels formed from light-emitting diodes (LEDs), organic LEDs (OLEDs), plasma cells, electronic ink elements, liquid crystal display (LCD) components, or other suitable image pixel structures. A cover glass layer may cover the surface of display 14. Portions of display 14 such as peripheral regions 201 may be inactive and may be devoid of image pixel structures. Portions of display 14 such as rectangular central portion 20A (bounded by dashed line 20) may correspond to the active part of display 14. In active display region 20A, an array of image pixels may be used to display images for a user.

The cover glass layer that covers display 14 may have openings such as a circular opening for button 16 and a speaker port opening such as speaker port opening 18 (e.g., for an ear speaker for a user). Device 10 may also have other openings (e.g., openings in display 14 and/or housing 12 for accommodating volume buttons, ringer buttons, sleep buttons, and other buttons, openings for an audio jack, data port connectors, removable media slots, etc.).

Housing 12 may include a peripheral conductive member such as a bezel or band of metal that runs around the rectangular outline of display 14 and device 10 (as an example). The peripheral conductive member may be used in forming the antennas of device 10 if desired.

Antennas may be located along the edges of device 10, on the rear or front of device 10, as extending elements or attachable structures, or elsewhere in device 10. With one suitable arrangement, which is sometimes described herein as an example, device 10 may be provided with one or more antennas at lower end 24 of housing 12 and one or more antennas at upper end 22 of housing 12. Locating antennas at opposing ends of device 10 (i.e., at the narrower end regions of display 14 and device 10 when device 10 has an elongated rectangular shape of the type shown in FIG. 1) may allow these antennas to be formed at an appropriate distance from ground structures that are associated with the conductive portions of display 14 (e.g., the pixel array and driver circuits in active region 20A of display 14).

If desired, a first cellular telephone antenna may be located in region 24 and a second cellular telephone antenna may be located in region 22. Antenna structures for handling satellite navigation signals such as Global Positioning System signals or wireless local area network signals such as IEEE 802.11 (WiFi®) signals or Bluetooth® signals may also be provided in regions 22 and/or 24 (either as separate additional antennas or as parts of the first and second cellular telephone antennas). Antenna structures may also be provided in regions 22 and/or 24 to handle WiMax (IEEE 802.16) signals.

In regions 22 and 24, openings may be formed between conductive housing structures and printed circuit boards and other conductive electrical components that make up device 10. These openings may be filled with air, plastic, or other dielectrics. Conductive housing structures and other conductive structures may serve as a ground plane for the antennas in device 10. The openings in regions 22 and 24 may serve as slots in open or closed slot antennas, may serve as a central dielectric region that is surrounded by a conductive path of materials in a loop antenna, may serve as a space that separates an antenna resonating element such as a strip antenna resonating element or an inverted-F antenna resonating element such as an inverted-F antenna resonating element formed from part of a conductive peripheral housing structure in device 10 from the ground plane, or may otherwise serve as part of antenna structures formed in regions 22 and 24.

Antennas may be formed in regions 22 and 24 that are identical (i.e., antennas may be formed in regions 22 and 24 that each cover the same set of cellular telephone bands or other communications bands of interest). Due to layout constraints or other design constraints, it may not be desirable to use identical antennas. Rather, it may be desirable to implement the antennas in regions 22 and 24 using different designs. For example, the first antenna in region 24 may cover all cellular telephone bands of interest (e.g., four or five bands) and the second antenna in region 22 may cover a subset of the four or five bands handled by the first antenna. Arrangements in which the antenna in region 24 handles a subset of the bands handled by the antenna in region 22 (or vice versa) may also be used. Tuning circuitry may be used to tune this type of antenna in real time to cover either a first subset of bands or a second subset of bands and thereby cover all bands of interest.

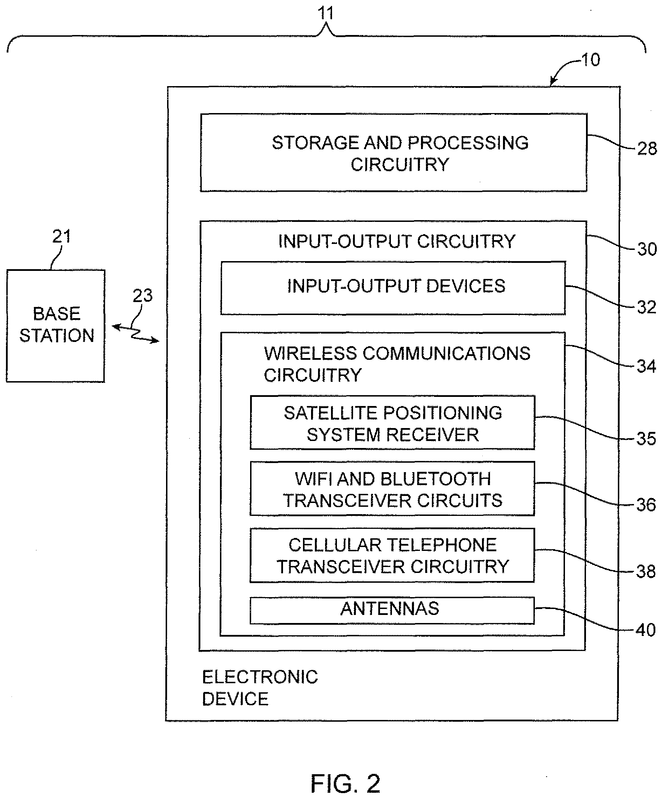

A schematic diagram of a system in which electronic device 10 may operate is shown in FIG. 2. As shown in FIG. 2, system 11 may include wireless network equipment such as base station 21 (sometimes referred to as a base transceiver station). Base stations such as base station 21 may be associated with a cellular telephone network or other wireless networking equipment. Device 10 may communicate with base station 21 over wireless link 23 (e.g., a cellular telephone link or other wireless communications link).

Device 10 may include control circuitry such as storage and processing circuitry 28. Storage and processing circuitry 28 may include storage such as hard disk drive storage, nonvolatile memory (e.g., flash memory or other electrically-programmable-read-only memory configured to form a solid state drive), volatile memory (e.g., static or dynamic random-access-memory), etc. Processing circuitry in storage and processing circuitry 28 and other control circuits such as control circuits in wireless communications circuitry 34 may be used to control the operation of device 10. This processing circuitry may be based on one or more microprocessors, microcontrollers, digital signal processors, baseband processors, power management units, audio codec chips, application specific integrated circuits, etc.

Storage and processing circuitry 28 may be used to run software on device 10, such as internet browsing applications, voice-over-internet-protocol (VOIP) telephone call applications, email applications, media playback applications, operating system functions, etc. To support interactions with external equipment such as base station 21, storage and processing circuitry 28 may be used in implementing communications protocols. Communications protocols that may be implemented using storage and processing circuitry 28 include internet protocols, wireless local area network protocols (e.g., IEEE 802.11 protocols -- sometimes referred to as WiFi^{®}), protocols for other short-range wireless communications links such as the Bluetooth^{®} protocol, IEEE 802.16 (WiMax) protocols, cellular telephone protocols such as the "2G" Global System for Mobile Communications (GSM) protocol, the "3G" Universal Mobile Telecommunications System (UMTS) protocol, the "4G" Long Term Evolution (LTE) protocol, etc.

Circuitry 28 may be configured to implement control algorithms that control the use of antennas in device 10. For example, circuitry 28 may configure wireless circuitry 34 to switch a particular antenna into use for transmitting and/or receiving signals. In some scenarios, circuitry 28 may be used in gathering sensor signals and signals that reflect the quality of received signals (e.g., received paging signals, received voice call traffic, received control channel signals, received traffic channel signals, etc.). Examples of signal quality measurements that may be made in device 10 include bit error rate measurements, signal-to-noise ratio measurements, measurements on the amount of power associated with incoming wireless signals, channel quality measurements based on received signal strength indicator (RSSI) information (RSSI measurements), channel quality measurements based on received signal code power (RSCP) information (RSCP measurements), channel quality measurements based on signal-to-interference ratio (SINR) and signal-to-noise ratio (SNR) information (SINR and SNR measurements), channel quality measurements based on signal quality data such as Ec/lo or Ec/No data (Ec/lo and Ec/No measurements), etc. This information may be used in controlling which antenna is used. Antenna selections can also be made based on other criteria.

Input-output circuitry 30 may be used to allow data to be supplied to device 10 and to allow data to be provided from device 10 to external devices. Input-output circuitry 30 may include input-output devices 32. Input-output devices 32 may include touch screens, buttons, joysticks, click wheels, scrolling wheels, touch pads, key pads, keyboards, microphones, speakers, tone generators, vibrators, cameras, accelerometers (motion sensors), ambient light sensors, and other sensors, light-emitting diodes and other status indicators, data ports, etc. A user can control the operation of device 10 by supplying commands through input-output devices 32 and may receive status information and other output from device 10 using the output resources of input-output devices 32.

Wireless communications circuitry 34 may include radio-frequency (RF) transceiver circuitry formed from one or more integrated circuits, power amplifier circuitry, low-noise input amplifiers, passive RF components, one or more antennas, and other circuitry for handling RF wireless signals.

Wireless communications circuitry 34 may include satellite navigation system receiver circuitry such as Global Positioning System (GPS) receiver circuitry 35 (e.g., for receiving satellite positioning signals at 1575 MHz). Transceiver circuitry 36 may handle 2.4 GHz and 5 GHz bands for WiFi^{®} (IEEE 802.11) communications and may handle the 2.4 GHz Bluetooth^{®} communications band. Circuitry 34 may use cellular telephone transceiver circuitry 38 for handling wireless communications in cellular telephone bands such as bands at 850 MHz, 900 MHz, 1800 MHz, 1900 MHz, and 2100 MHz or other cellular telephone bands of interest. Wireless communications circuitry 34 can include circuitry for other short-range and long-range wireless links if desired (e.g., WiMax circuitry, etc.). Wireless communications circuitry 34 may, for example, include, wireless circuitry for receiving radio and television signals, paging circuits, etc. In WiFi^{®} and Bluetooth^{®} links and other short-range wireless links, wireless signals are typically used to convey data over tens or hundreds of feet. In cellular telephone links and other long-range links, wireless signals are typically used to convey data over thousands of feet or miles.

Wireless communications circuitry 34 may include antennas 40. Antennas 40 may be formed using any suitable types of antenna. For example, antennas 40 may include antennas with resonating elements that are formed from loop antenna structures, patch antenna structures, inverted-F antenna structures, closed and open slot antenna structures, planar inverted-F antenna structures, helical antenna structures, strip antennas, monopoles, dipoles, hybrids of these designs, etc. Different types of antennas may be used for different bands and combinations of bands. For example, one type of antenna may be used in forming a local wireless link antenna and another type of antenna may be used in forming a remote wireless link antenna. As described in connection with FIG. 1, there may be multiple cellular telephone antennas in device 10. For example, there may be one cellular telephone antenna in region 24 of device 10 and another cellular telephone antenna in region 22 of device 10. These antennas may be fixed or may be tunable.

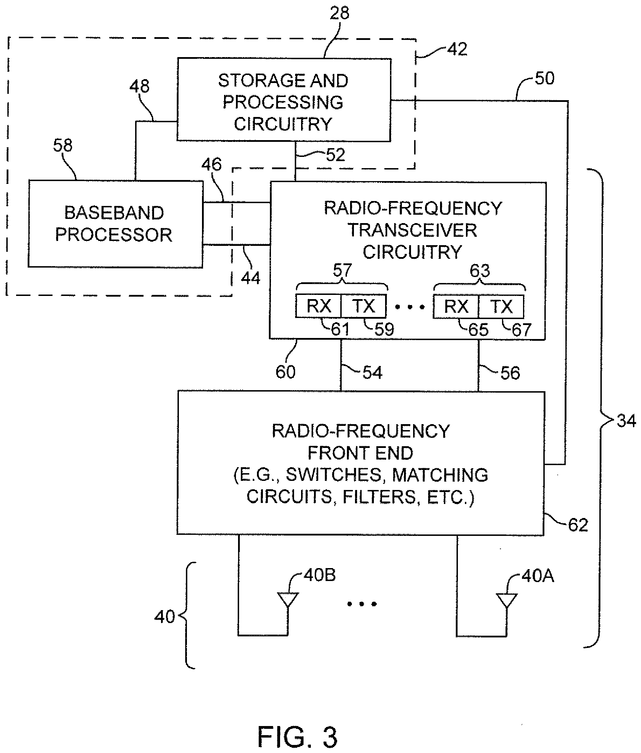

Device 10 can be controlled by control circuitry that is configured to store and execute control code for implementing control algorithms (e.g., antenna diversity control algorithms and other wireless control algorithms). As shown in FIG. 3, control circuitry 42 may include storage and processing circuitry 28 (e.g., a microprocessor, memory circuits, etc.) and may include baseband processor 58. Baseband processor 58 may form part of wireless circuitry 34 and may include memory and processing circuits (i.e., baseband processor 58 may be considered to form part of the storage and processing circuitry of device 10).

Baseband processor 58 may provide data to storage and processing circuitry 28 via path 48. The data on path 48 may include raw and processed data associated with wireless (antenna) performance metrics for received signals such as received power, transmitted power, frame error rate, bit error rate, channel quality measurements based on received signal strength indicator (RSSI) information, channel quality measurements based on received signal code power (RSCP) information, channel quality measurements based on signal-to-interference ratio (SINR) and signal-to-noise ratio (SNR) information, channel quality measurements based on signal quality data such as Ec/lo or Ec/No data, information on whether responses (acknowledgements) are being received from a cellular telephone tower corresponding to requests from the electronic device, information on whether a network access procedure has succeeded, information on how many re-transmissions are being requested over a cellular link between the electronic device and a cellular tower, information on whether a loss of signaling message has been received, and other information that is reflective of the performance of wireless circuitry 34. This information may be analyzed by storage and processing circuitry 28 and/or processor 58 and, in response, storage and processing circuitry 28 (or, if desired, baseband processor 58) may issue control commands for controlling wireless circuitry 34. For example, storage and processing circuitry 28 may issue control commands on path 52 and path 50.

Wireless circuitry 34 may include radio-frequency transceiver circuitry such as radio-frequency transceiver circuitry 60 and radio-frequency front-end circuitry 62. Radio-frequency transceiver circuitry 60 may include one or more radio-frequency transceivers such as transceivers 57 and 63 (e.g., one or more transceivers that are shared among antennas, one transceiver per antenna, etc.). In the illustrative configuration of FIG. 3, radio-frequency transceiver circuitry 60 has a first transceiver such as transceiver 57 that is associated with path (port) 54 (and which may be associated with path 44) and a second transceiver such as transceiver 63 that is associated with path (port) 56 (and which may be associated with path 46). Transceiver 57 may include a transmitter such as transmitter 59 and a receiver such as receiver 61 or may contain only a receiver (e.g., receiver 61) or only a transmitter (e.g., transmitter 59). Transceiver 63 may include a transmitter such as transmitter 67 and a receiver such as receiver 65 or may contain only a receiver (e.g., receiver 65) or only a transmitter (e.g., transmitter 67).

Baseband processor 58 may receive digital data that is to be transmitted from storage and processing circuitry 28 and may use path 46 and radio-frequency transceiver circuitry 60 to transmit corresponding radio-frequency signals. Radio-frequency front end 62 may be coupled between radio-frequency transceiver 60 and antennas 40 and may be used to convey the radio-frequency signals that are produced by transmitters 59 and 67 to antennas 40. Radio-frequency front end 62 may include radio-frequency switches, impedance matching circuits, filters, and other circuitry for forming an interface between antennas 40 and radio-frequency transceiver 60.

Incoming radio-frequency signals that are received by antennas 40 may be provided to baseband processor 58 via radio-frequency front end 62, paths such as paths 54 and 56, receiver circuitry in radio-frequency transceiver 60 such as receiver 61 at port 54 and receiver 63 at port 56, and paths such as paths 44 and 46. Baseband processor 58 may convert these received signals into digital data that is provided to storage and processing circuitry 28. Baseband processor 58 may also extract information from received signals that is indicative of signal quality for the channel to which the transceiver is currently tuned. For example, baseband processor and/or other circuitry in control circuitry 42 may analyze received signals to produce bit error rate measurements, measurements on the amount of power associated with incoming wireless signals, strength indicator (RSSI) information, received signal code power (RSCP) information, signal-to-interference ratio (SINR) information, signal-to-noise ratio (SNR) information, channel quality measurements based on signal quality data such as Ec/lo or Ec/No data, etc. This information may be used in controlling which antenna(s) to use in device 10. For example, a control algorithm running on control circuitry 42 may be used to switch a particular antenna into use based on signal strength data measurements such as these.

Radio-frequency front end 62 may include a switch that is used to connect transceiver 57 to antenna 40B and transceiver 63 to antenna 40A or vice versa. The switch may be configured by control signals received from control circuitry 42 over path 50. Circuitry 42 may, for example, adjust the switch to select which antenna is being used to transmit radio-frequency signals (e.g., when it is desired to share a single transmitter in transceiver 60 between two antennas) or which antenna is being used to receive radio-frequency signals (e.g., when it is desired to share a single receiver between two antennas).

If desired, antenna selection may be made by selectively activating and deactivating transceivers without using a switch in front end 62. For example, if it is desired to use antenna 40B, transceiver 57 (which may be coupled to antenna 40B through circuitry 62) may be activated and transceiver 63 (which may be coupled to antenna 40A through circuitry 62) may be deactivated. If it is desired to use antenna 40A, circuitry 42 may activate transceiver 63 and deactivate transceiver 57. Combinations of these approaches may also be used to select which antennas are being used to transmit and/or receive signals.

Control operations such as operations associated with configuring wireless circuitry 34 to transmit or receive radio-frequency signals through a desired one of antennas 40 may be performed using a control algorithm that is implemented on control circuitry 42 (e.g., using the control circuitry and memory resources of storage and processing circuitry 28 and baseband processor 58).

Antenna operation can be disrupted when an antenna in device 10 is blocked by an external object such as a user's hand, when device 10 is placed near objects that interfere with proper antenna operation, or due to other factors (e.g., device orientation relative to its surroundings, etc.). To ensure that an optimum antenna is used, device 10 may monitor the signals received on each antenna and can switch an appropriate antenna into use for handling the wireless communications traffic for device 10 based on the monitored signals.

An antenna switching algorithm that runs on the circuitry of device 10 can be used to automatically perform antenna switching operations based on the evaluated signal quality of received signals. The antenna switching algorithm may direct device 10 to select a new antenna for use in handling wireless signals (e.g., cellular telephone signals or other wireless traffic) whenever antenna performance on the currently used antenna has degraded relative to an available alternate antenna or when other antenna switching criteria have been satisfied. With this type of arrangement, it is not necessary to simultaneously use multiple antennas and associated circuits for handling wireless signals, thereby minimizing power consumption.

Arrangements in which device 10 has a first antenna and a second antenna are sometimes described herein as an example. This is, however, merely illustrative. Device 10 may use three or more antennas if desired. Device 10 may use antennas that are substantially identical (e.g., in band coverage, in efficiency, etc.), or may use other types of antenna configurations.

In performing antenna switching operations, device 10 may measure signal strength using any suitable signal quality metric. As an example, device 10 may measure received signal power, may gather received signal strength indicator (RSSI) information, may gather received signal code power (RSCP) information, or may gather other information on received signal strength.

Received signal strength information may be gathered for each antenna in device 10. For example, if device 10 includes upper and lower antennas, the signal strength for signals received in both the upper and lower antennas can be gathered. The received signal strengths of the upper and lower antennas may be processed by an antenna switching control algorithm. The switching algorithm may use switching criteria and the measured received antenna signal strengths to determine in real time whether the antenna assignments in device 10 should be switched. If the switching criteria are satisfied, the antennas can be swapped. If, for example, it is determined by comparing received signal strength data to threshold settings that the lower antenna is being blocked, the upper antenna may be switched into use to serve as a currently active antenna in place of the lower antenna while the lower antenna is switched out of use to serve as an alternate antenna.

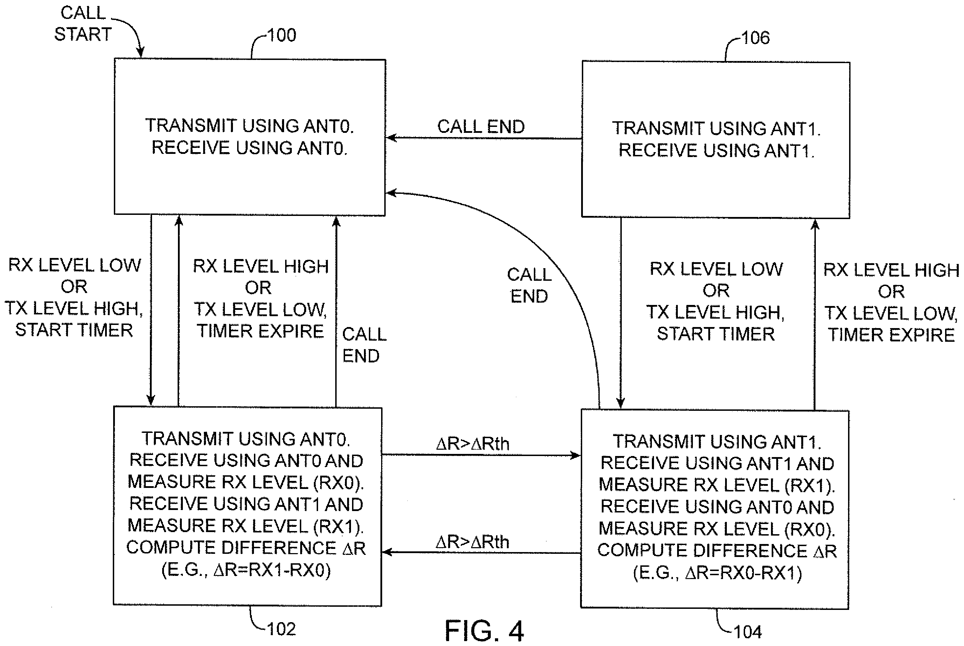

FIG. 4 is a diagram of an exemplary switching control algorithm for use with device 10 that supports time division multiple access (TDMA) such as GSM, UMTS, LTE, and other TDMA network access technologies. When a call is established between device 10 and a current serving base transceiver station, device 10 may be initialized to operate in state 100. In state 100, device 10 may transmit and receive radio-frequency signals using lower antenna ANT0 (sometimes referred to as the "primary" antenna). If the received (RX) signals exhibit low power levels (e.g., if the RX level is less than a first predetermined threshold) or if device 10 receives transmit power control (TPC) commands from the base station that instruct device 10 to transmit radio-frequency signals using high output power (e.g., if the TX level is greater than a second predetermined threshold), a timer that specifies the minimum measurement period may be started and device 10 may be placed in state 102.

In general, this transition from state 100 to 102 may take place only if the wireless connection between device 10 and the base station using antenna ANT0 is weak. If the RX level is high (e.g., if the RX level is greater than the first predetermined threshold) and if device 10 is transmitting signals using low output power (e.g., if the TX level is less than the second predetermined threshold), device 10 may remain in state 100 until termination of the call.

In state 102, device 10 may transmit radio-frequency signals using antenna ANT0, may receive radio-frequency signals using antenna ANT0 during first time periods, and may receive radio-frequency signals using upper antenna ANT1 (sometimes referred to as the "secondary" antenna) during second time periods. In this example, device 10 does not support receive diversity (e.g., receiver 65 is turned off or is non-existent), and only one of antennas ANT0 and ANT1 may be actively coupled to receiver 61 during operation of device 10. Receive level RX0 associated with ANT0 may be measured using device 10 during the first time periods (e.g., device 10 may use switching circuitry in RF front-end 62 to couple ANT0 to receiver 61 and to decouple ANT1 from receiver 61 during the first time periods), whereas receive level RX1 associated with ANT1 may be measured using device 10 during the second time periods (e.g., device 10 may use switching circuitry in RF front-end 62 to couple ANT1 to receiver 61 and to decouple ANT0 from receiver 61 during the second time periods).

A resulting signal strength difference value ΔR may be computed by subtracting RX0 from RX1 (e.g., ΔR is equal to RF1 minus RX0). If ΔR exceeds a predetermined difference threshold ΔRth (i.e., if the switching criterion is satisfied), device 10 may transition to operate in state 104. If device 10 is transmitting using low output power or if RX0 is high after the minium measurement timer expires (or if the call ends), device 10 may transition back to state 100. While the minimum measurement timer is running or while either RX0 is low or transmit power is high, device 10 may continuously monitor RX0 and RX1 by switching back and forth between ANT0 and ANT1 to receive downlink signals from the current serving base station.

In state 104, device 10 may transmit radio-frequency signals using antenna ANT1, may receive radio-frequency signals using antenna ANT1 during first time periods, and may receive radio-frequency signals using upper antenna ANT0 during second time periods. Receive level RX1 associated with ANT1 may be measured using device 10 during the first time periods, whereas receive level RX0 associated with ANT0 may be measured using device 10 during the second time periods.

A resulting signal strength difference value ΔR may be computed by subtracting RX1 from RX0 (e.g., ΔR is equal to RX0 minus RX1). If ΔR exceeds the predetermined difference threshold ΔRth (i.e., if the switching criterion is satisfied), device 10 may transition to operate in state 102. If device 10 is transmitting using low output power or if RX1 is high when the timer expires, device 10 may transition to state 106. While the minimum measurement timer is running or while either RX1 is low or the transmit power is high, device 10 may continuously monitor RX0 and RX1 by switching back and forth between ANT0 and ANT1 to receive downlink signals from the base station. If the call ends, device 10 may transition back to default state 100.

In state 106, device 10 may transmit and receive radio-frequency signals using upper antenna ANT1. If the RX1 is less than the first predetermined threshold or if device 10 receives transmit power control (TPC) commands from the base station that instruct device 10 to transmit radio-frequency signals using a TX level that is greater than the second predetermined threshold, a timer that specifies the minimum measurement period may be started and device 10 may be configured to operate in state 104. This transition from state 106 to 104 may take place only if the connection between device 10 and the base station using antenna ANT1 is weak. If RX1 is high (e.g., if the RX level is greater than the first predetermined threshold) and if device 10 is transmitting signals using low output power (e.g., if the TX level is less than the second predetermined threshold), device 10 may remain in state 106 until termination of the call.

While device 10 is operating in states 100 and 102, antenna ANT0 may be referred to as the currently active or the "current" antenna whereas antenna ANT1 may be referred to as the "alternate" antenna. While device 10 is operating in states 104 and 106, antenna ANT1 may be referred to as the currently active antenna whereas antenna ANT0 may be referred to as the alternate antenna. Described as such, the currently active antenna may be defined as the most recently selected optimum antenna or the default antenna upon the start of a call. In general, any one of the multiple antennas can be configured to serve as the currently active antenna depending on which antenna is more capable at handling wireless communications traffic for device 10. Signal strength difference values may generally be calculated by subtracting the RX level measured with the currently active antenna from the RX level measured with the alternate antenna (as an example).

This switching control algorithm may be extended to devices with more than two antennas, more than three antennas, more than five antennas, etc. For a device 10 that supports receive diversity, the multiple antennas for such device 10 may simultaneously monitor signal strength using their respective receivers (e.g., antennas ANT0 and ANT1 may receive RF signals in parallel using receivers 61 and 65, respectively) without having to actively switch among the different antennas during states 102 and 104. For example, device 10 may use switching circuitry in RF front-end 62 to couple the currently active antenna to receiver 61 and to couple the alternate antenna to receiver 65 so that receivers 61 and 65 are able to receive downlink signals in parallel.

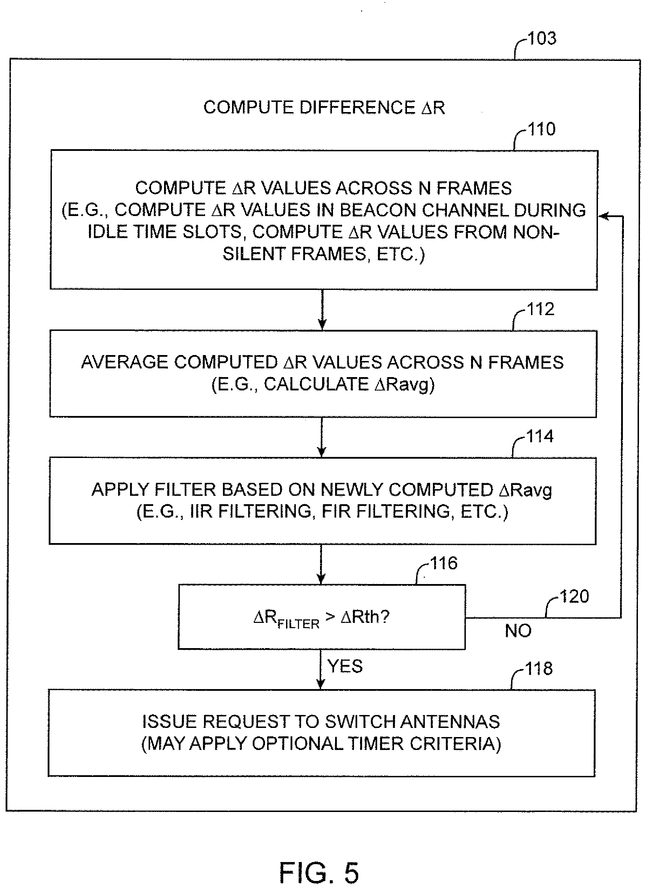

FIG. 5 is a flow chart of illustrative steps involved in the computation of ΔR (e.g., step 103 may be performed during states 102 and 104). At step 110, ΔR values may be computed across N TDMA frames. For example, at least three different ΔR values may be computed for each slow associated control channel (SACCH) multi-frame containing 104 TDMA frames. The ΔR values may be computed by measuring downlink signal quality in a beacon channel during idle time slots or by detecting/measuring traffic signal quality from non-silent traffic channel frames (as examples). At step 112, ΔR may be averaged across the N TDMA frames. In the example provided above, ΔRavg may be calculated by taking the mean of the at least three different ΔR values.

To suppress noise while ensuring rapid response to changing conditions, time-based averaging filters may be applied to the newly calculated ΔRavg value (step 114). Multiple filters may be used, each with different associated filtering characteristics. For example, there may be two, three, or more than three filters each of which has different associated filtering characteristics. Any suitable filtering scheme may be used (e.g., a linear average, a weighted averaged that favors more recent activity, finite impulse response (FIR) or infinite impulse response (IIR) filters, etc.).

The filtered version ΔR_{FILTER} may be compared to predetermined signal difference threshold ΔRth (at step 116). If ΔR_{FILTER} is less than or equal to ΔRth, processing may loop back to step 110 as indicated by path 120. If ΔR_{FILTER} is greater than ΔRth, the switching criterion is met and control circuitry 42 may issue a request to switch antennas (e.g., to set the alternate antenna as the currently active antenna and vice versa), as shown in step 118.

If desired, an optional timer operation may be incorporated into the control algorithm. Using a timer, the control algorithm on device 10 may impose a requirement for antenna switching that a particular threshold condition be met a certain number of times per unit time. The timer may, for example, require that threshold ΔRth be exceeded at least once per second to meet switching criteria. The use of a timer limit that requires the threshold to be exceeded at least once per second is merely illustrative. Other suitable limit values that specify how many times per unit time the threshold must be exceeded before antenna switching operations are performed may be used if desired.

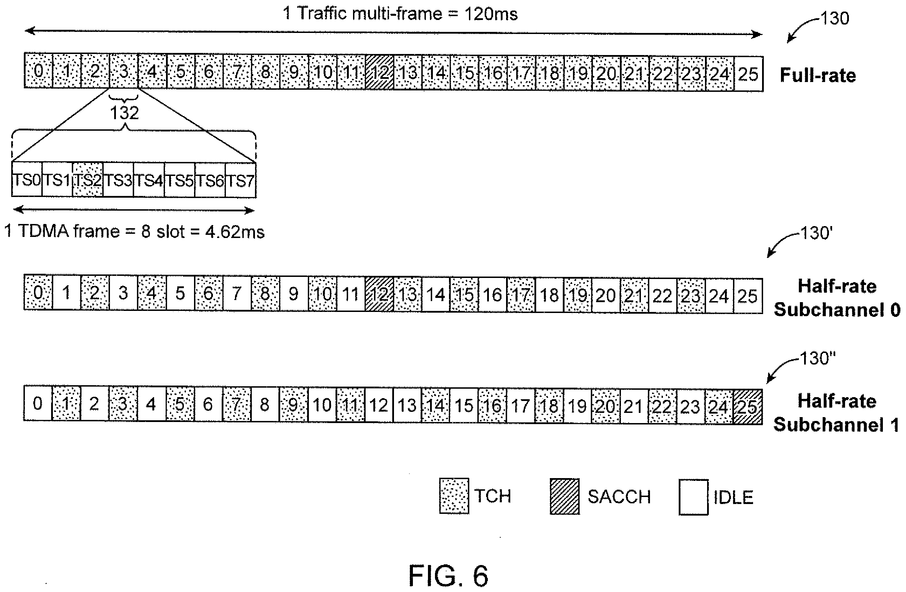

TDMA frames may be transmitted as part of a traffic channel (TCH) multi-frame. As shown in FIG. 6, a traffic channel multi-frame 130 may, for example, include 26 TDMA frames 132. Each TDMA frame 132 may include eight time slots TS0-TS7. Each time slot may have a duration of 576,9 µs, totaling 4.62 ms per TDMA frame and 120 ms per traffic channel multi-frame that contains 26 TDMA frames. Device 10 may be allocated a traffic channel (TCH) in at least one of the eight time slots such as TS2 (see, e.g., FIG. 6, time slot TS2 may be assigned to device 10). In the example of FIG. 6, device 10 may transmit and/or receive traffic data bursts during TCH time slot TS2 of a TDMA frame 132. Time slots other than the TCH time slot may be referred to as idle time slots.

For full-rate TCH multi-frames, every TDMA frame with the exception of the last (26^{th}) TDMA frame is considered to be a non-idle frame. For example, TDMA frames with indices 0-11 and 13-24 may each include at least one TCH time slot. The TDMA frames that include at least one traffic channel time slot may be referred to as TCH frames. The TDMA frame with index 12 may include at least one time slot dedicated to a slow associated control channel (SACCH). The TDMA frames that include at least one SACCH time slot may be referred to as SACCH frames. Device 10 may send and receive control/supervisory signals associated with the traffic channels during transmission of the SACCH frames.

For half-rate TCH multi-frames, 13 of the 26 TDMA frames are idle (e.g., data bursts are not transmitted in consecutive TDMA frames). There may be two types of half-rate TCH multi-frames. The first type (sometimes referred to as sub-channel 0) of half-rate TCH multi-frames 130' may have TCH frames at indices 0, 2, 4, 6, 8, 10, 13, 15, 17, 19, 21, and 23 and a SACCH frame at index 12. The second type (sometimes referred to as sub-channel 1) of half-rate TCH multi-frames 130" may have TCH frames at indices 1, 3, 5, 7, 9, 11, 4, 16, 18, 20, 22, and 24 that and a SACCH frame at index 25.

In one suitable embodiment of the present invention, device 10 may perform signal quality measurements in a beacon channel during at least one of the idle time slots. The beacon channel (sometimes referred to as a broadcast control channel BCCH) represents a designated frequency containing broadcast control information that reveals the identity, configuration, and available features associated with a particular base station (e.g., with a particular "cell" or base transceiver station). Information broadcast in the beacon channel is often transmitted continuously by the base station at full power in order to facilitate the neighbor cell measurements of the mobile stations.

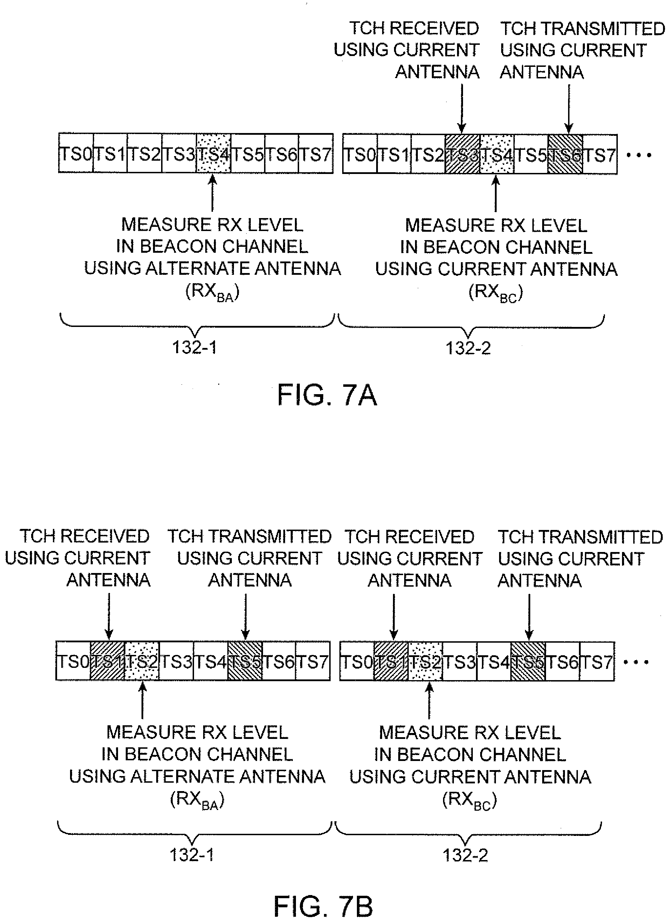

FIG. 7A is a diagram showing device 10 that is receiving frames in half-rate mode and that is configured to make RX signal quality measurements with alternating antennas in the beacon channel of a current serving cell during a selected one of the idle times slots. FIG. 7A shows, for example, an idle frame 132-1 followed by a successive TCH frame 132-2. In this example, antenna ANT1 may be considered to be the currently active antenna, whereas antenna ANT0 may be considered to be the alternate antenna.

During a predetermined time slot of idle frame 132-1 (e.g., during time slot TS4), device 10 may receive control signals in the beacon channel and measure the corresponding receive level (RX_{BA}) using the alternate antenna. Device 10 may then use the current antenna to receive traffic data signals during TCH time slot TS3 of frame 132-2, may receive control signals during predetermined time slot TS4 of frame 132-2 in the beacon channel and measure the corresponding receive level (RX_{BC}), and may transmit traffic data signals during TCH time slot TS6 of frame 132-2. The measured RX levels RX_{BA} and RX_{BC} may, for example, include strength indicator (RSSI) information, received signal code power (RSCP) information, signal-to-interference ratio (SINR) information, signal-to-noise ratio (SNR) information, channel quality measurements based on signal quality data such as Ec/lo or Ec/No data, etc.

A ΔR value may then be computed based on RX_{BA} and RX_{BC} (e.g., ΔR = RX_{BA} - RX_{BC}). Signal quality difference values ΔR may be continuously computed in this way for each consecutive pair of TDMA frames. In general, beacon channel signals may be received using the alternate antenna during idle frames, whereas beacon channel signals may be received using the currently active antenna during TCH frames to minimize antenna switching.

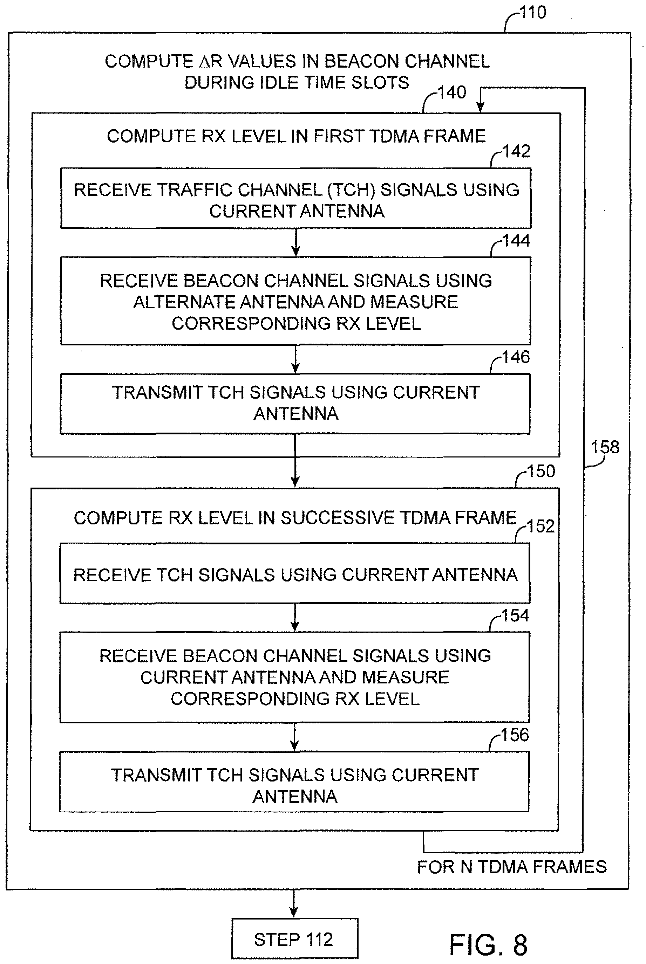

Beacon-channel-based measurements may also be made for device 10 operating in full-rate mode. FIG. 8A shows, for example, a first TCH frame 132-1 followed by a second (successive) TCH frame 132-2. In this example, antenna ANT0 may be considered to be the currently active antenna, whereas antenna ANT1 may be considered to be the alternate antenna.

Device 10 may receive traffic data signals during TCH time slot TS1 of frame 132-1 using the current antenna, may receive control signals during a predetermined time slot of frame 132-1 (e.g., time slot TS2) in the beacon channel using the alternate antenna and measure the corresponding receive level (RX_{BA}), and may transmit traffic data signals during TCH time slot TS5 of frame 132-1 using the current antenna. Device 10 may use the current antenna to receive traffic data signals during TCH time slot TS1 of frame 132-2, receive control signals during time slot TS2 of frame 132-2 in the beacon channel and measure the corresponding receive level (RX_{BC}), and may transmit traffic data signals during TCH time slot TS5 of frame 132-2. A single ΔR value may be computed based on RX_{BA} and RX_{BC} (e.g., ΔR = RX_{BA} - RX_{BC}). Signal quality difference values ΔR may be continuously computed using alternating antennas for each consecutive pair of TDMA frames.

The diagrams of FIGS. 7A and 7B are merely illustrative and are not intended to limit the scope of the present invention. In general, beacon channel measurements may be made in an idle time slot adjacent to the associated TCH time slot. If desired, beacon channel measurements may be made in any idle time slot, traffic data bursts may be received and/or transmitted in any available time slot in each TDMA frame, etc.

Steps related to beacon-channel-based ΔR calculations in full-rate systems are shown in FIG. 8. At step 140, the RX level may be computed for a first TDMA frame in a given pair of consecutive frames. During step 140, TCH signals may be received using the current antenna during a first TCH time slot (step 142), broadcast control signals may be received in a beacon channel using the alternate antenna and a corresponding receive metric may be measured using storage and processing circuitry 28 in device 10 during an idle time slot (step 144), and TCH signals may be transmitted using the current antenna during a second TCH time slot (step 146).

At step 150, the RX level may be computed for a second TDMA frame in the given pair of consecutive frames. During step 150, the currently active antenna may be used to receive TCH signals during a first TCH time slot (step 152), to receive broadcast control signals in the beacon channel during an idle time slot (and a corresponding receive metric may be measured using storage and processing circuitry 28 in device 10) (step 154), and to transmit TCH signals during a second TCH time slot (step 156). Processing may loop back to step 140 to perform additional RX level measurements for a desired number (N) of TDMA frames. At step 112, an average ΔRavg value may then be computed based on the ΔR values calculated from the N frames (see, e.g., FIG. 5).

Beacon-channel-based measurements for half-rate systems are similar to those shown in FIG. 8, except steps 142 and 146 may be omitted. In situations in which receiver diversity is available in device 10, device 10 may use both the current and alternate antennas to simultaneously receive broadcast control signals (e.g., by enabling both receivers 61 and 65) in the beacon channel during a single predetermined time slot in each TDMA frame. Device 10 may continuously monitor the receive signal quality of the different antennas to ensure that an optimum antenna is switched into use.

In another suitable embodiment of the present invention, device 10 may perform signal quality measurements for TDMA frames processed using the adaptive multi-rate (AMR) speech codec (e.g., TDMA frames encoded in an AMR audio format). The AMR speech codec is a standard audio data compression scheme commonly used in GSM and UMTS network access technologies (as examples). The AMR speech codec may rely on various audio processing techniques such as algebraic code excited linear prediction (ACELP) compression, discontinuous transmission (DTX), voice activity detection (VAD), and comfort noise generation (CNG).

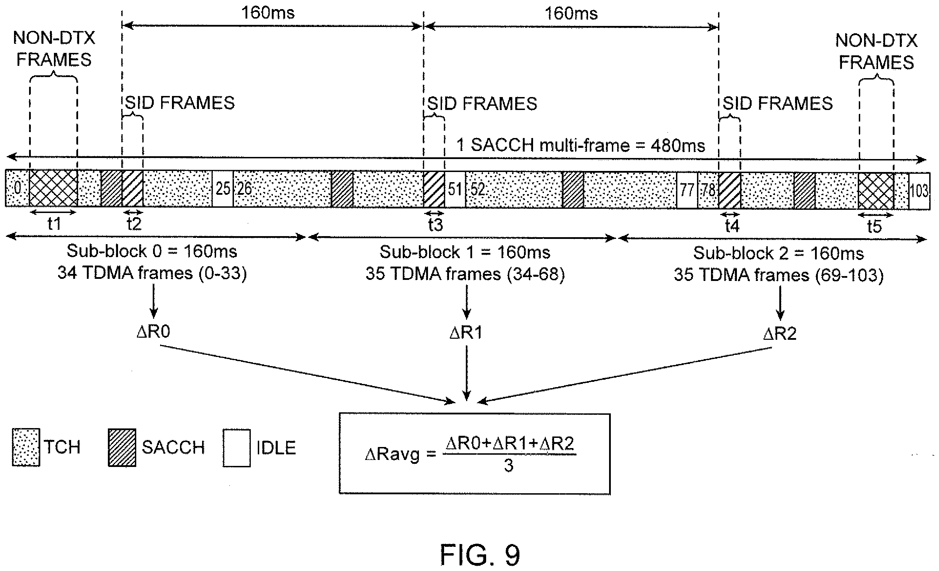

To handle downlink DTX (e.g., silence periods during which device 10 is not receiving any valid signals), device 10 may be configured to blindly detect for the presence of TDMA frames exhibiting energy levels exceeding a minimum power threshold (i.e., to blindly detect non-DTX frames). Measurement of receive signal quality using this arrangement may sometimes be referred to as traffic-channel-based measurements (or non-silent-frame-detection-based signal quality measurements). Non-DTX-based measurement may, for example, involve detection of non-silent frames across an entire SACCH multi-frame to obtain a single filtered ΔR value (FIG. 5). As shown in FIG. 9, a SACCH multi-frame may include four TCH multi-frames or 104 (e.g., N = 104) TDMA frames with a duration of approximately 480 ms. Because each SACCH multi-frame includes four TCH multi-frames, each SACCH multi-frame may include at least four separate SACCH frames indexed at 12, 38, 64, and 90 (as an example).

In AMR speech codec, silence indicator description (SID) frames may be transmitted every 160 ms during silence periods by a currently serving base station. The SID frames received by DUT 10 may be used to set the comfort noise level of the call and may allow device 10 to make signal quality measurements. Because SID frames are transmitted every 160 ms, the SACCH multi-frame may be divided into three (480 ms divided by 160 ms) different sub-blocks (e.g., sub-block 0 having 34 TDMA frames, sub-block 1 having 35 TDMA frames, and sub-block 2 having 35 TDMA frames). Dividing the SACCH multi-frame into three different sub-blocks ensures that at least some SID frame are received by device 10 during each sub-block, because each sub-block has a duration of 160 ms. In general, the length of each sub-block is inversely proportional to the frequency at which the SID frames are intermittently transmitted. If the SID frames are sent every 80 ms, each SACCH multi-frame may be divided into six (480 divided by 80) sub-blocks. If the SID frames are sent every 240 ms, each SACCH multi-frame may be divided into two (480 divided by 240) sub-blocks.

During each sub-block, device 10 may be configured-to detect non-silent frames and/or SID frames. In the example of FIG. 9, device 10 may detect and receive non-DTX frames during time period t1 using alternating antennas and measure corresponding receive radio-frequency metrics (e.g., signal strength indicator (RSSI) information, received signal code power (RSCP) information, signal-to-interference ratio (SINR) information, signal-to-noise ratio (SNR) information, channel quality measurements based on signal quality data such as Ec/lo or Ec/No data, etc.) to compute resulting ΔR values. If the maximum magnitude (or absolute value) of ΔR computed during time period t1 exceeds a predetermined ΔRmax threshold, SID frames received during time period t2 need not be measured. If the maximum magnitude of ΔR computed during time period t1 is less than predetermined ΔRmax threshold, SID frames received during time period t2 can be measured and additional ΔR values are computed.

In the example of FIG. 9, sub-block 1 does not contain any non-silent frames other than the intermittently transmitted SID frame during time period t3. Device 10 may therefore detect and receive these SID frames using its antennas and measure the desired radio-frequency metrics to compute and store ΔR values.

In the example of FIG. 9, sub-block 2 contains non-DTX frames (excluding the SID frames). For example, device 10 may first detect and receive SID frames during time period t4 using alternating antennas and measure corresponding receive power metrics to compute resulting ΔR values. Device 10 may then detect and receive non-DTX frames during time period t5 using its antennas and measure corresponding receive power metrics to compute resulting ΔR values. Detecting and monitoring receive levels in this way ensures that at least some non-silent TDMA frames are received for each sub-block.

Device 10 may be configured to store the maximum ΔR value that has the maximum absolute value associated with each sub-block per unit SACCH multi-frame. For example, the maximum |ΔR| associated with sub-block 0, 1, and 2 may be equal to ΔR0, ΔR1, and ΔR2, respectively. A single ΔRavg may then be computed by computing the mean of ΔR0, ΔR1, and ΔR2 for each SACCH multi-frame.

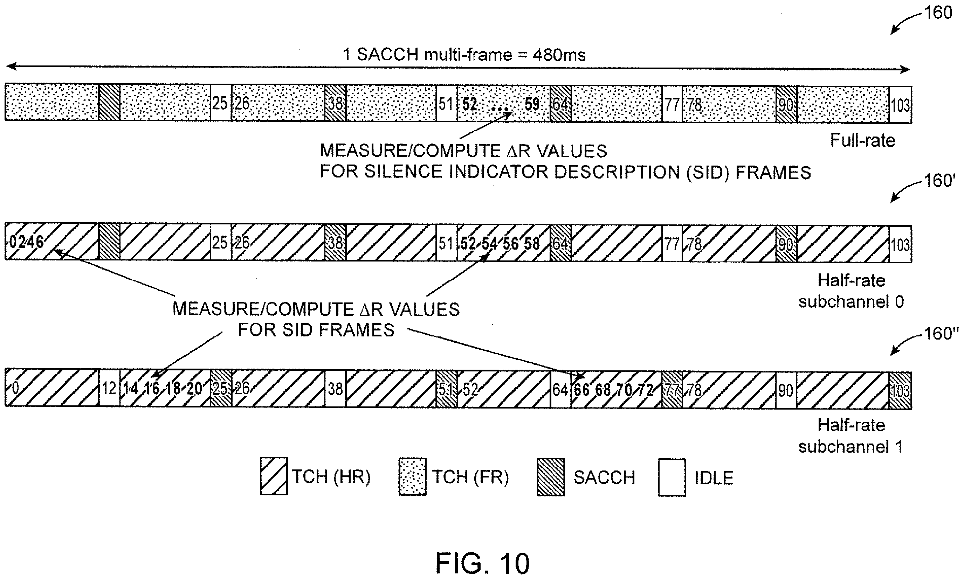

In another suitable embodiment of the present invention, device 10 may perform signal quality measurements for TDMA frames processed using non-AMR speech codecs. For non-AMR speech codecs, a currently serving base station may transmit SACCH multi-frames that include a predetermined pattern of TDMA frames reserved for SID frames (e.g., each SACCH frame has predetermined TDMA frame locations (or portions) that is reserved for transmission of SID frames). FIG. 10 shows different types of SACCH multi-frames each of which include different reserved SID frame patterns.

Full-rate SACCH multi-frame 160 may, for example, include SID frames at indices 52-59. In this example, device 10 may use its currently active antenna to measure SID frames 52, 54, 56 and 58 and may use its alternate antenna to measure SID frames 53, 55, 57, and 59 (e.g., device 10 may use continuously toggle its receive antenna for consecutive SID frames). As a result, four ΔR values may be computed based on the four pairs of RXc/RXa levels. The four ΔR values may then be averaged to obtain ΔRavg for the SACCH multi-frame. If desired, more than four or less than four pairs of receive power metrics (e.g., receive signal strength indicator (RSSI) information, received signal code power (RSCP) information, signal-to-interference ratio (SINR) information, signal-to-noise ratio (SNR) information, channel quality measurements based on signal quality data such as Ec/lo or Ec/No data, etc.) may be measured by toggling the multiple antennas of device 10, and the SID frames may be transmitted in any portion of the SACCH multi-frame.

As another example, half-rate sub-channel 0 SACCH multi-frame 160' may include SID frames at indices 0, 2, 4, 6, 52, 54, 56, and 58. In this example, device 10 may use its current antenna to measure SID frames 0, 4, 52 and 56 and may use its alternate antenna to measure SID frames 2, 6, 54, and 58. As a result, four ΔR values may be computed based on the four pairs of RXc/RXa levels. The four ΔR values may then be averaged to obtain ΔRavg for the SACCH multi-frame. If desired, more than four or less than four pairs of receive power metrics may be measured by toggling the multiple antennas of device 10, and the SID frames may be transmitted in any predetermined subset of the SACCH multi-frame.

As another example, half-rate sub-channel 1 SACCH multi-frame 160" may include SID frames at indices 14, 16,18, 20, 66, 68, 70, and 72. In this example, device 10 may use its currently active antenna to measure SID frames 14, 18, 66, and 70 and may use its alternate antenna to measure SID frames 16, 20, 68, and 72. As a result, four ΔR values may be computed based on the four pairs of RXc/RXa levels. The four ΔR values may then be averaged to obtain ΔRavg for the SACCH multi-frame. If desired, more than four or less than four pairs of receive power metrics may be measured by toggling the multiple antennas of device 10, and the SID frames may be transmitted in any predetermined subset of the SACCH multi-frame.

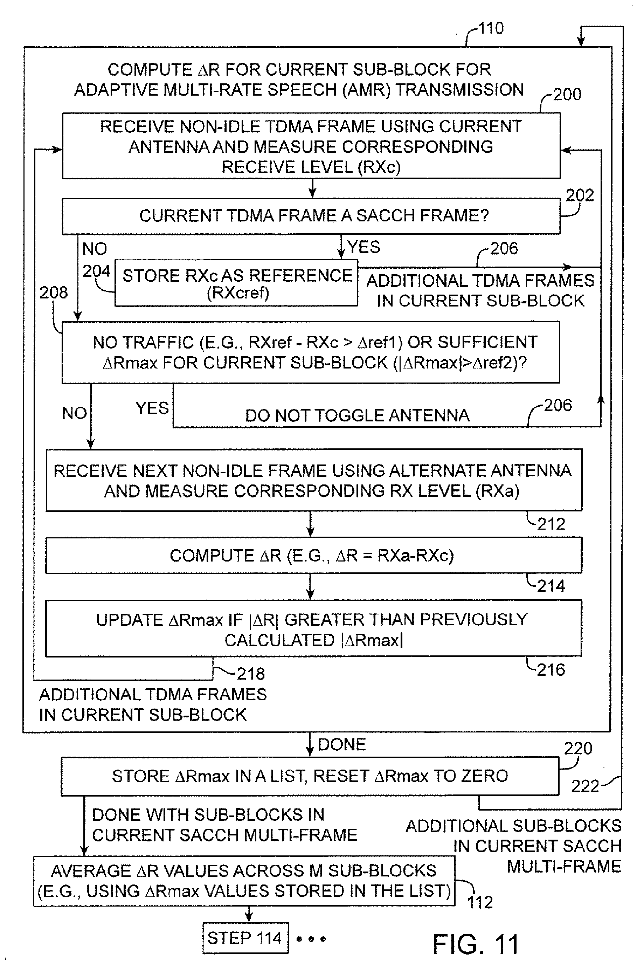

FIG. 11 is a flow chart of illustrative steps involved in computing the average ΔRavg for AMR-audio-codec-based TDMA networks. At step 200, device 10 may use its currently active antenna to receive a given non-idle TDMA frame (i.e., a TCH frame, a SACCH frame, a SID frame, etc.) and to measure a corresponding receive level RXc. At step 202, control circuitry 42 may be used to determine whether or not the given TDMA frame is a SACCH frame.

If the given TDMA frame is a SACCH frame, receive level RXc may be used as a new reference receive power level RXref (e.g., reference level RXref may be constantly updated any time a new SACCH frame is received). Processing may then loop back to step 200 to receive a successive non-idle TDMA frame, as indicated by path 206. If the given TDMA frame is not a SACCH frame (e.g., if the current frame is a TCH frame or a SID frame), processing may proceed to step 208.

At step 208, control circuitry 42 may be used to determine whether the traffic level is low (e.g., to check whether the difference between RXref and RXc is greater than first predetermined threshold amount Δref1) or whether the maximum absolute value of ΔR computed thus far for this current sub-block is sufficiently high to suppress additional antenna toggling for the rest of this sub-block (e.g., to check whether |ΔRmax| is greater than second predetermined threshold amount Δref2). If at least one of the two condition is met (i.e., if the current TDMA is a silent frame or if |ΔRmax| is greater than Δref2), processing will loop back to step 200 so that the next non-idle frame will be received using the current antenna (i.e., antenna is not toggled), as indicated by path 206. If neither condition is met (i.e., if the current TDMA frame received using the currently active antenna is a non-silent frame and if |ΔRmax| is less than Δref2), processing may proceed to step 212.

At step 212, device 10 will toggle its antenna usage so that it uses its alternate antenna to receive the next non-idle TDMA while measuring a corresponding receive level RXa. At step 214, a ΔR value may be computed by subtracting RXc from RXa. A positive ΔR is reflective of a stronger signal strength received using the alternate antenna relative to the current antenna. At step 216, ΔRmax may be updated if the absolute value of ΔR (i.e., |ΔR|) computed during step 214 is greater than the absolute value of previously stored value of ΔRmax (e.g., ΔRmax will be set equal to the currently computed ΔR if the currently computed |ΔR| is greater than |ΔRmax|). Processing may loop back to step 200 to monitor addition TDMA frames in the current sub-block, as indicated bypath 218.

After receipt of a final TDMA frame in the current sub-block, processing may proceed to step 220. At step 220, the current value of ΔRmax may be stored separately in a list and ΔRmax may be reset to zero in preparation to monitor the next sub-block. Processing may loop back to step 110 to measure ΔRmax for the next sub-block, as indicated by path 222.

When ΔRmax values for each of the different sub-blocks in the current SACCH multi-frame have been computed and stored in the list, ΔRavg may be computed by taking the mean of the ΔRmax associated with each sub-block (step 112). For example, ΔRavg for that SACCH multi-frame may be computed by averaging ΔRmax associated with sub-block 0, ΔRmax associated with sub-block 1, and ΔRmax associated with sub-block 2 (e.g., by averaging all the stored ΔRmax that are associated with the current SACCH multi-frame). Processing may proceed to step 114 to apply desired filtering as described in connection with FIG. 5.

The steps described in connection with FIG. 11 are merely illustrative and are not intended to limit the scope of the present invention. If desired, these steps may be applied to mobile devices with receive diversity. For such types of devices, steps 208 and 212 may be collapsed into a single step during which both the currently active and alternate antennas receive an incoming non-DTX frame so that RXc and RXa can be simultaneously measured during a single non-idle TDMA frame. In general, these steps may also be extended to handle wireless devices with more two antennas, with more than three antennas, with more than five antennas, etc.

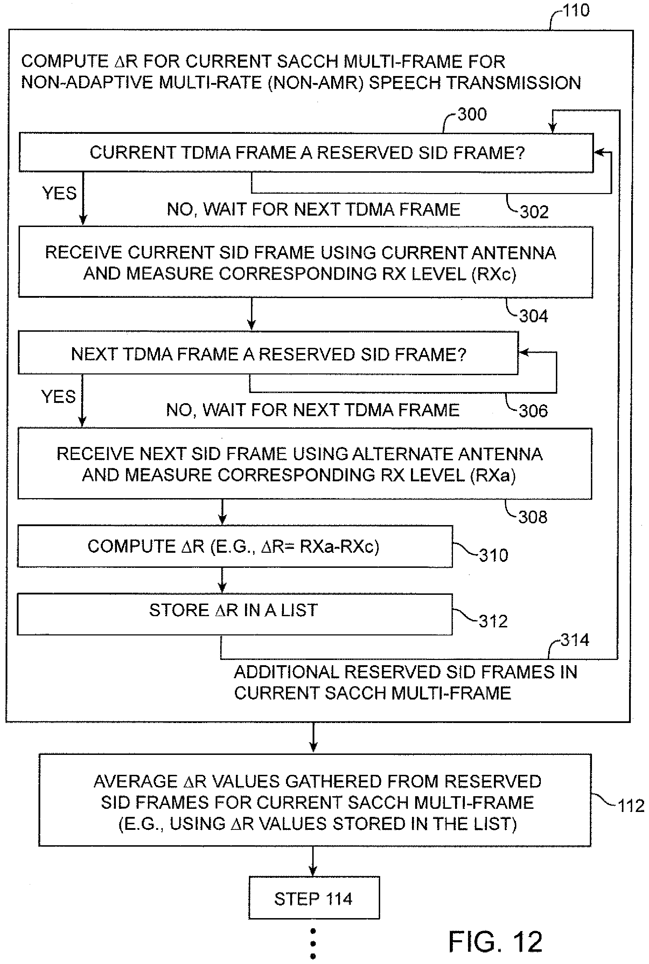

FIG. 12 is a flow chart of illustrative steps involved in computing the average ΔRavg for non-AMR-audio-codec-based networks. At step 300, device 10 may determine whether the current frame is a reserved SID frame (e.g., device 10 may be configured to expect to receive SID frames during predetermined portions of each SACCH multi-frame). For example, consider a scenario in which device 10 is configured to receive a SACCH multi-frame that includes reserved SID frames at first and second portions of the SACCH multi-frame. If the current frame is not a reserved SID frame (i.e., if the current frame is not part of the first and second portions of the SACCH multi-frame), device 10 may not make any signal quality measurements and may wait for the next TDMA frame (as indicated by path 302). If the current frame is a reserved SID frame (i.e., if the current frame forms part of the first or second portions of the SACCH multi-frame), device 10 may receive the current SID frame using the current antenna and measure corresponding receive level RXc (step 304).

At step 306, device 10 may determine whether the next frame is a reserved SID frame. If the next frame is not a reserved SID frame or is an idle frame, device 10 may not make any signal quality measurements and may wait for the next TDMA frame (as indicated by path 308). If the next frame is a reserved SID frame, device 10 may receive that SID frame using the alternate antenna and measure corresponding receive level RXa (step 308). At step 310, a ΔR value may be computed based on RXc and RXa measured during steps 304 and 308, respectively (e.g., ΔR = RXa - RXc). At step 312, the ΔR value maybe stored in a list on device 10. Processing may loop back to step 300 if there are additional reserved SID frames in the current SACCH multi-frame.

At step 112, ΔRavg may be computed by taking the mean of the stored ΔR values that are associated with the current SACCH multi-frame. Processing may proceed to step 114 to apply desired filtering as described in connection with FIG. 5.

The steps described in connection with FIG. 12 are merely illustrative and are not intended to limit the scope of the present invention. If desired, these steps may be applied to mobile devices with receive diversity. For such types of devices, steps 304 and 308 may be collapsed into a single step during which both current and alternate antennas receive an incoming reserved SID frame so that RXc and RXa can be simultaneously measured. In general, these steps may also be extended to handle wireless devices with more two antennas, with more than three antennas, with more than five antennas, etc.

The foregoing embodiments may be implemented individually or in any combination.

## Claims

1. A method of operating an electronic device (10), the method comprising:
operating the electronic device (10) in a first state, comprising:
receiving signals using a currently active antenna, wherein an alternate antenna is not used to receive signals;
transmitting signals using the currently active antenna, wherein the alternate antenna is not used to transmit data;
transitioning to a second state and starting a timer that specifies a minimum measurement period in response to determining that either a receive power level of the signals received using the currently active antenna is less than a first threshold or a transmit power level of the signals transmitted using the currently active antenna exceed a second threshold; and
operating the electronic device in the second state, comprising:
receiving signals using the currently active antenna;
receiving signals using the alternate antenna;
transmitting signals using the currently active antenna, wherein the alternate antenna is not used to transmit data;
switching the currently active antenna and the alternate antenna in response to determining that the power level of the signals received using the alternate antenna exceeds the power level of the signals received using the currently active antenna by at least a third threshold; and
transitioning to the first state in response to the timer expiring and determining that a receive power level of the signals received using the currently active antenna exceeds the first threshold and a transmit power level of the signals transmitted using the currently active antenna is less than the second threshold.

2. The method of Claim 1, wherein the receive power level of a particular antenna is determined by measuring a signal strength of a non-silent data frame received using the particular antenna.

3. The method of Claim 1, wherein operating in the second state comprises switching between receiving signals using the currently active antenna and receiving signals using the alternate antenna.

4. The method of Claim 1, wherein operating in the second state comprises receiving signals simultaneously for the currently active antenna and the alternate antenna.

5. The method of Claim 1, wherein the receive power level of a particular antenna is determined by measuring a signal strength of a beacon channel received using the particular antenna.

6. A non-transitory computer readable storage medium with at least one computer program stored thereon, the at least one computer program configured to, when executed by a processor of a wireless device (10), perform the method according to any of claims 1 through 5.

7. A wireless device (10), comprising:
a processor (58);
two antennas (40), wherein one of the two antennas is designated as a currently active antenna, and the other of the two antennas is designated as an alternate antenna;
a first wireless interface in data communication with the processor (58); and a computer readable apparatus (28) in data communication with the processor (58) and having a non-transitory storage medium with at least one computer program stored thereon, the at least one computer program configured to, when executed on the processor, perform the method according to any of claims 1 through 5.

8. The wireless device (10) of Claim 7, wherein the device is configured to determine a power level of a particular antenna by measuring a signal strength of a non-silent data frame received using the particular antenna.

9. The wireless device (10) of Claim 7, wherein operating in the second state further comprises causing the wireless device (10) to switch between receiving signals using the currently active antenna and receiving signals using the alternate antenna.

10. The wireless device (10) of Claim 7, wherein operating in the second state further comprises causing the wireless device (10) to receive signals simultaneously for the currently active antenna and the alternate antenna.

11. The wireless device (10) of Claim 7, wherein the device is configured to determine a power level of a particular antenna by measuring a signal strength of a beacon channel received using the particular antenna.

## Patentansprüche

1. Verfahren zum Betreiben einer elektronischen Vorrichtung (10), das Verfahren umfassend:
Betreiben der elektronischen Vorrichtung (10) in einem ersten Zustand, umfassend:
Empfangen von Signalen unter Verwendung einer aktuell aktiven Antenne, wobei eine alternative Antenne nicht zum Empfangen von Signalen verwendet wird;
Übermitteln von Signalen unter Verwendung der aktuell aktiven Antenne, wobei die alternative Antenne nicht verwendet wird, um Daten zu übermitteln;
Übergehen in einen zweiten Zustand und Starten eines Timers, der eine minimale Messperiode spezifiziert, in Antwort auf ein Bestimmen, dass entweder ein Empfangsleistungsniveau des Signals, welches unter Verwendung der aktuell aktiven Antenne empfangen wird, niedriger ist als ein erster Schwellwert oder ein Übertragungsleistungsniveau des Signals, welches unter Verwendung der aktuell aktiven Antenne übertragen wird, einen zweiten Schwellwert überschreitet; und
Betreiben der elektronischen Vorrichtung in dem zweiten Zustand, umfassend:
Empfangen von Signalen unter Verwendung der aktuell aktiven Antenne;
Empfangen von Signalen unter Verwendung der alternativen Antenne;
Übermitteln von Signalen unter Verwendung der aktuell aktiven Antenne, wobei die alternative Antenne nicht zum Übermitteln von Daten verwendet wird;
Umschalten der aktuell aktiven Antenne und der alternativen Antenne in Antwort auf die Bestimmung, dass das Leistungsniveau der Signale, welche unter Verwendung der alternativen Antenne empfangen wurden, das Leistungsniveau der Signale, welche unter Verwendung der aktuell aktiven Antenne empfangen wurden, um zumindest einen dritten Schwellwert überschreitet; und
Übergehen in den ersten Zustand in Antwort auf ein Ablaufen des Timers und Bestimmen, dass ein Empfangsleistungsniveau des Signals, welches unter Verwendung der aktuell aktiven Antenne empfangen wurde, den ersten Schwellwert überschreitet und ein Übermittlungsleistungsniveau des Signals, welches unter Verwendung der aktuell aktiven Antenne übermittelt wurde, niedriger ist als der zweite Schwellwert.

2. Verfahren nach Anspruch 1, wobei das Empfangsleistungsniveau einer bestimmten Antenne durch Messen einer Signalstärke eines nicht-stillen Datenrahmens, welcher unter Verwendung der bestimmten Antenne empfangen wurde, bestimmt wird.

3. Verfahren nach Anspruch 1, wobei das Betreiben in dem zweiten Zustand ein Umschalten zwischen dem Empfangen von Signalen unter Verwendung der aktuell aktiven Antenne und dem Empfangen von Signalen unter Verwendung der alternativen Antenne umfasst.

4. Verfahren nach Anspruch 1, wobei das Betreiben in dem zweiten Zustand ein gleichzeitiges Empfangen von Signalen der aktuell aktiven Antenne und der alternativen Antenne umfasst.

5. Verfahren nach Anspruch 1, wobei das Empfangsleistungsniveau einer bestimmten Antenne durch Messen einer Signalstärke eines Beacon-Kanals, der unter Verwendung der bestimmten Antenne empfangen wurde, bestimmt wird.

6. Nichtflüchtiges computerlesbares Speichermedium mit zumindest einem darauf gespeicherten Computerprogramm, wobei das zumindest eine Computerprogramm konfiguriert ist, um, wenn es durch einen Prozessor einer Drahtlosvorrichtung (10) durchgeführt wird, das Verfahren nach irgendeinem der Ansprüche 1 bis 5 durchzuführen.

7. Drahtlosvorrichtung (10), umfassend:
einen Prozessor (58);
zwei Antennen (40), wobei eine der zwei Antennen als eine aktuell aktive Antenne vorgesehen ist und die andere der zwei Antennen als eine alternative Antenne vorgesehen ist;
eine erste Drahtlosschnittstelle, die mit dem Prozessor (58) in Datenkommunikation steht; und
eine computerlesbare Vorrichtung (28), die mit dem Prozessor (58) in Datenkommunikation steht, und ein nichtflüchtiges Speichermedium mit zumindest einem darauf gespeicherten Computerprogramm aufweist, wobei das zumindest eine Computerprogramm konfiguriert ist, um, wenn es durch den Prozessor ausgeführt wird, das Verfahren nach irgendeinem der Ansprüche 1 bis 5 durchzuführen.

8. Drahtlosvorrichtung (10) nach Anspruch 7, wobei die Vorrichtung dazu konfiguriert ist, um ein Leistungsniveau einer bestimmten Antenne durch das Messen einer Signalstärke eines nicht-stillen Datenrahmens, welcher unter Verwendung der bestimmten Antenne empfangen wurde, zu bestimmen.

9. Drahtlosvorrichtung (10) nach Anspruch 7, wobei das Betreiben in dem zweiten Zustand weiterhin ein Veranlassen der Drahtlosvorrichtung (10) zum Umschalten zwischen dem Empfangen von Signalen unter Verwendung der aktuell aktiven Antenne und dem Empfangen von Signalen unter Verwendung der alternativen Antenne umfasst.

10. Drahtlosvorrichtung (10) nach Anspruch 7, wobei das Betreiben in dem zweiten Zustand weiterhin ein Veranlassen der Drahtlosvorrichtung (10) zum gleichzeitigen Empfangen von Signalen der aktuell aktiven Antenne und der alternativen Antenne umfasst.

11. Drahtlosvorrichtung (10) nach Anspruch 7, wobei die Vorrichtung dazu konfiguriert ist, um ein Leistungsniveau einer bestimmten Antenne durch Messen einer Signalstärke eines Beacon-Kanals, der unter Verwendung der bestimmten Antenne empfangen wurde, zu bestimmen.

## Revendications

1. Un procédé de mise en oeuvre d'un dispositif électronique (10), le procédé comprenant :
la mise en oeuvre du dispositif électronique (10) dans un premier état, comprenant :
la réception de signaux en utilisant une antenne présentement active, une antenne de substitution n'étant pas utilisée pour recevoir des signaux ;
l'émission de signaux en utilisant l'antenne présentement active, l'antenne de substitution n'étant pas utilisée pour émettre des données ;
la transition vers un second état et le démarrage d'une temporisation qui spécifie une période de mesure minimale en réponse à la détermination soit qu'un niveau de puissance en réception des signaux reçus en utilisant l'antenne présentement active est inférieur à un premier seuil soit qu'un niveau de puissance d'émission des signaux en émission en utilisant l'antenne présentement active dépasse un second seuil ; et
la mise en oeuvre du dispositif électronique dans le second état, comprenant :
la réception de signaux en utilisant l'antenne présentement active ;
la réception de signaux en utilisant l'antenne de substitution ;
l'émission de signaux en utilisant l'antenne présentement active, l'antenne de substitution n'étant pas utilisée pour émettre des données ;
la permutation de l'antenne présentement active et de l'antenne de substitution en réponse à la détermination que le niveau de puissance des signaux reçus en utilisant l'antenne de substitution dépasse le niveau de puissance des signaux reçus en utilisant l'antenne présentement active d'au moins un troisième seuil ; et
la transition vers le premier état en réponse à l'expiration de la temporisation et à la détermination qu'un niveau de puissance en réception des signaux reçus en utilisant l'antenne présentement active dépasse le premier seuil et qu'un niveau de puissance en émission des signaux émis en utilisant l'antenne présentement active est inférieur au second seuil.

2. Le procédé de la revendication 1, dans lequel le niveau de puissance en réception d'une antenne particulière est déterminé par mesure d'une puissance de signal d'une trame de données non silencieuses reçues en utilisant l'antenne particulière.

3. Le procédé de la revendication 1, dans lequel la mise en oeuvre dans le second état comprend la permutation entre la réception de signaux en utilisant l'antenne présentement active et la réception de signaux en utilisant l'antenne de substitution.

4. Le procédé de la revendication 1, dans lequel la mise en oeuvre dans le second état comprend la réception de signaux simultanément pour l'antenne présentement active et l'antenne de substitution.

5. Le procédé de la revendication 1, dans lequel le niveau de puissance en réception d'une antenne particulière est déterminé par mesure d'une puissance de signal d'un canal balise reçu en utilisant l'antenne particulière.

6. Un support de stockage non temporaire lisible par calculateur avec au moins un programme informatique stocké dessus, le au moins un programme informatique étant configuré pour, lorsqu'il est exécuté par un processeur d'un dispositif sans fil (10), mettre en oeuvre le procédé selon l'une des revendications 1 à 5.

7. Un dispositif sans fil (10), comprenant :
un processeur (58) ;
deux antennes (40), l'une des deux antennes étant considérée comme antenne présentement active, et l'autre des deux antennes étant considérée comme antenne de substitution ;
une première interface sans fil en communication de données avec le processeur (58) ; et
un équipement lisible par calculateur (28) en communication de données avec le processeur (58) et possédant un support de stockage non temporaire avec au moins un programme informatique stocké dessus, le au moins un programme informatique étant configuré pour, lorsqu'il est exécuté sur le processeur, mettre en oeuvre le procédé selon l'une des revendications 1 à 5.

8. Le dispositif sans fil (10) de la revendication 7, dans lequel le dispositif est configuré pour déterminer un niveau de puissance d'une antenne particulière par mesure d'une puissance de signal d'une trame de données non silencieuse reçue en utilisant l'antenne particulière.

9. Le dispositif sans fil (10) de la revendication 7, dans lequel la mise en oeuvre dans le second état comprend en outre le fait d'amener le dispositif sans fil (10) à permuter entre réception de signaux en utilisant l'antenne présentement active et la réception de signaux en utilisant l'antenne de substitution.

10. Le dispositif sans fil (10) de la revendication 7, dans lequel la mise en oeuvre dans le second état comprend en outre le fait d'amener le dispositif sans fil (10) à recevoir des signaux simultanément pour l'antenne présentement active et l'antenne de substitution.

11. Le dispositif sans fil (10) de la revendication 7, dans lequel le dispositif est configuré pour déterminer un niveau de puissance d'une antenne particulière par mesure d'une puissance de signal d'un canal balise reçu en utilisant l'antenne particulière.
